# EUROPÄISCHE PATENTSCHRIFT

(11) **EP 2 449 289 B1**
(45) Veröffentlichungstag und Bekanntmachung des Hinweises auf die Patenterteilung: **02.12.2015**
(21) Anmeldenummer: 10725046.6
(22) Anmeldetag: 15.06.2010
(51) Int. Cl.: F16H 47/04, F16H 37/08, F16H 61/431, F16H 61/462, F16H 3/00

(54) **ANTRIEBSSYSTEM UND VERFAHREN ZUM WECHSELN VON FAHRBEREICHEN DES ANTRIEBSSYSTEMS**
DRIVE SYSTEM AND METHOD FOR CHANGING DRIVING RANGES OF THE DRIVE SYSTEM
SYSTÈME D'ENTRAÎNEMENT ET PROCÉDÉ DE COMMUTATION ENTRE MODES DE CONDUITE DU SYSTÈME D'ENTRAÎNEMENT

(30) Priorität: 01.07.2009 DE 102009031382
(43) Veröffentlichungstag der Anmeldung: 09.05.2012
(73) Patentinhaber: Robert Bosch GmbH, 70469 Stuttgart (DE)
(72) Erfinder: MUTSCHLER, Steffen, 89231 Neu-Ulm (DE); NICOLA, Andreas, 89073 Ulm (DE)
(74) Vertreter: Thürer, Andreas
(86) Internationale Anmeldenummer: PCT/EP2010/003571
(87) Internationale Veröffentlichungsnummer: WO 2011/000472

(56) Entgegenhaltungen:
- EP-A2- 1 626 206
- DE-A1- 10 248 400
- DE-A1- 19 622 711
- DE-A1- 19 954 894

## Beschreibung

Die Erfindung betrifft ein Antriebssystem mit einem ersten und einem zweiten Leistungszweig, die über ein Summiergetriebe miteinander verbunden sind, wobei der erste Leistungszweig eine stufenlos verstellbare Getriebeeinheit aufweist, sowie ein Verfahren zum Wechseln von Fahrbereichen des Antriebssystems.

Die gattungsbildende EP 1 626 206 A2 zeigt verschiedenen Antriebssysteme mit einer Abtriebswelle, mit einem ersten Leistungszweig, der eine stufenlos verstellbare, hydrostatischen Getriebeeinheit aufweist, und mit einem zweiten, mechanischen Leistungszweig, der mit dem ersten Leistungszweig über ein Planetengetriebe verbunden ist. Ein Sonnenrad des Planetengetriebes ist drehfest mit einer Ausgangswelle der verstellbaren Getriebeeinheit verbunden. Ein Steg des Planetengetriebes ist direkt und drehfest mit der Abtriebswelle des Antriebssystems verbunden. Ein Hohlrad des Planetengetriebes ist drehfest mit einer Ausgangswelle des zweiten Leistungszweigs verbunden und kann über eine Bremse relativ zu einem Gehäuse stillgesetzt werden. Bei stillgesetztem Hohlrad ist zwar der Steg des Planetengetriebe drehfest mit der Ausgangswelle der verstellbaren, hydrostatischen Getriebeeinheit, eine synchroner Schaltpunkt zwischen dem ersten, rein hydrostatischen Fahrbereich und dem zweiten Fahrbereich ist jedoch nicht gegeben.

Die Antriebssysteme nach der EP 1 626 206 A2 haben nur asynchrone Schaltpunkte.

Auch die DE 196 22 711 A1 zeigt ein Antriebssystem mit einer Abtriebswelle, mit einem ersten Leistungszweig, der eine stufenlos verstellbare, hydrostatischen Getriebeeinheit aufweist, und mit einem zweiten, mechanischen Leistungszweig, der mit dem ersten Leistungszweig über ein Planetengetriebe verbunden ist. Ein Hohlrad des Planetengetriebes ist drehfest mit einer Ausgangswelle der verstellbaren Getriebeeinheit und über eine Kupplung mit einer Abtriebswelle des Antriebssystems verbindbar. Ein Sonnenrad des Planetengetriebes ist direkt und drehfest mit der Abtriebswelle des Antriebssystems verbunden. Ein Steg des Planetengetriebes ist drehfest mit einer Ausgangswelle des zweiten Leistungszweigs verbunden. Bei dem Antriebssystem nach der DE 196 22 711 A1 sind für jede Fahrrichtung nur zwei Fahrbereiche vorgesehen. Dementsprechend sind im zweiten Leistungszweig nicht verschiedene über Kupplungen auswählbare feste Übersetzungen vorhanden.

Aus der US 3,714,845 ist ein Antriebssystem mit einem ersten und einem zweiten Leistungszweig bekannt. Der erste Leistungszweig weist eine stufenlos verstellbare Getriebeeinheit auf. Diese stufenlos verstellbare Getriebeeinheit ist über ein Summiergetriebe mit dem zweiten, mechanischen Leistungszweig verbunden. Das Summiergetriebe besteht aus einem ersten und einem zweiten Planetengetriebe. Der Ausgang der stufenlos verstellbaren Getriebeeinheit ist permanent mit jeweils einem Element der beiden Planetengetriebe drehfest verbunden. Ferner ist der Ausgang der stufenlos verstellbaren Getriebeeinheit mit einer Abtriebswelle verbunden, die ihrerseits mit einem zweiten Getriebeelement jeweils der beiden Planetengetriebe verbunden ist. Das jeweilige dritte Getriebeelement der beiden Planetengetriebe ist über eine erste Kupplung mit einer Getriebeeingangsseite oder über eine zweite Kupplung mit einer Getriebeeingangsseite verbindbar. Durch die Verwendung von zwei Planetengetrieben in dem Summiergetriebe ergeben sich auch zwei synchrone Schaltpunkte. Unter einem synchronen Schaltpunkt versteht man dabei, dass die Ein- und Ausgangsdrehzahlen der zu schließenden Kupplung im Schaltpunkt identisch sind. Damit kann eine solche Kupplung ohne auftretenden Schlupf geschlossen werden. Bei der aus der US 3,714,845 bekannten Lösung liegen solche synchrone Schaltpunkte sowohl für die erste Kupplung, als auch bei einer anderen Abtriebswellendrehzahl des Antriebssystems für die zweite Kupplung vor.

Problematisch an dem beschriebenen Antriebsystem ist es, dass zum Ausbilden synchroner Schaltpunkte zwischen den insgesamt drei Fahrbereichen bereits zwei Planetengetriebe erforderlich sind. Für den Fall, dass eine Erweiterung auf mehr Übersetzungsverhältnisse gewünscht ist, wird damit der Aufbau des Summiergetriebes beliebig komplex.

Es ist daher die Aufgabe der vorliegenden Erfindung, eine Vereinfachung des bekannten Aufbaus zu erreichen, wobei auch für eine größere Anzahl von Übersetzungsstufen der konstruktive Aufwand gering gehalten werden soll, und ein Verfahren zur Steuerung der Fahrbereichswechsel zu schaffen.

Die Aufgabe wird durch das erfindungsgemäße Antriebssystem mit wenigstens drei Fahrbereichen mit den Merkmalen des Anspruchs 1 sowie das erfindungsgemäße Verfahren mit den Schritten gemäß Anspruch 12 gelöst. Das erfindungsgemäße Antriebssystem weist eine Abtriebswelle und einen ersten Leistungszweig und einen zweiten Leistungszweig auf. Der erste Leistungszweig umfasst eine stufenlos verstellbare Getriebeeinheit. Der erste Leistungszweig und der zweite Leistungszweig sind über ein Summiergetriebe (25) miteinander verbunden. Das Summiergetriebe weist ein erstes Getriebeelement auf, das mit einer Ausgangswelle der verstellbaren Getriebeeinheit permanent drehfest verbunden ist. Ein zweites Getriebeelement des Summiergetriebes ist mit der Abtriebswelle drehfest verbunden. Das Summiergetriebe weist zudem noch ein drittes Getriebeelement auf. Der zweite Leistungszweig ein mechanischer Getriebezweig mit verschiedenen über Kupplungen auswählbaren festen Übersetzungen ist und besitzt eine Ausgangswelle, die drehfest mit dem dritten Getriebeelement verbunden ist. Außerdem ist die verstellbare Getriebeeinheit über eine Kupplung drehfest mit der Abtriebswelle verbindbar Die Abtriebswelle ist über eine Getriebestufe permanent drehfest mit dem zweiten Getriebeelement verbunden ist.

Über diese zusätzliche Getriebestufe lässt sich leicht das benötigte Übersetzungsverhältnis einstellen, welches beispielsweise aus ökonomischen Gründen den synchronen Schaltpunkt festlegt, z.B. unter Berücksichtigung des Gesamtwirkungsgrades. Dabei könnte insbesondere auch zwischen der Ausgangswelle der stufenlos verstellbaren Getriebeeinheit und der Abtriebswelle des Antriebssystems wenigstens eine Übersetzungsstufe vorgesehen sein. Durch diese beiden Übersetzungsstufen, über die einerseits die Abtriebswelle mit dem zweiten Getriebeelement und andererseits die Abtriebswelle mit der Ausgangswelle des stufenlos verstellbaren Getriebes verbunden ist, lässt sich der synchrone Schaltpunkt gezielt auf das Übersetzungsverhältnis des mechanischen Getriebezweigs in dem zweiten Fahrbereich abstimmen.

Durch die Verwendung eines mechanischen Getriebezweigs, dessen Ausgangswelle drehfest mit dem dritten Getriebeelement verbunden ist, zusammen mit der beschriebenen Verbindbarkeit des Ausgangs der stufenlos verstellbaren Getriebeeinheit wird erreicht, dass bei einem Fahrbereichswechsel aus einem ersten, rein durch die stufenlos verstellbare Getriebeeinheit realisierten Fahrbereich in einen zweiten, leistungsverzweigten Fahrbereich ein synchroner Schaltpunkt vorliegt. Durch das Verbinden der Ausgangswelle der stufenlos verstellbaren Getriebeeinheit sowohl mit dem ersten Getriebeelement als auch mit dem zweiten Getriebeelement in dem ersten Fahrbereich ergibt sich eine Zwangsdrehzahl für das dritte Getriebeelement.

Dieses dritte Getriebeelement ist mit der Ausgangswelle des mechanischen Getriebezweigs verbunden. Die Drehzahlverhältnisse und Übersetzungsverhältnisse für den ersten und den zweiten Fahrbereich sind dabei so abgestimmt, dass in einem Schaltpunkt die Synchronbedingung für eine der Kupplungen des mechanischen Getriebezweigs für eine bestimmte Übersetzungsstufe erfüllt ist. Der Wechsel von Übersetzungsverhältnissen in dem mechanischen Getriebezweig zum Wechseln zwischen dem zweiten und dritten Fahrbereich erfolgt dagegen durch Öffnen und Schließen der beiden Kupplungen des mechanischen Getriebezweigs. Diese Wechsel erfolgen allerdings unter Verwendung eines asynchronen Schaltpunkts. Ein asynchroner Schaltpunkt bedeutet dabei, dass beim Gangwechsel zunächst Schlupf an der zu schließenden Kupplung und nach Schließen dieser Kupplung Schlupf an der zu öffnenden Kupplung auftritt. Während einer Übergangsphase tritt Schlupf an beiden Kupplungen auf. Damit wird durch das aufeinander abgestimmte Öffnen und Schließen der beiden Kupplungen des mechanischen Getriebezweigs der Sprung im Drehzahlverhältnis zwischen Eingangsdrehzahl und Ausgangsdrehzahl des mechanischen Getriebezweigs synchronisiert. In diesem Zusammenhang wird nachfolgend von einem asynchronen Schaltpunkt gesprochen.

Bei dem erfindungsgemäßen Verfahren zum Wechseln von Fahrbereichen für das oben beschriebene System wird also zunächst zum Wechsel aus einem ersten Fahrbereich, der rein über den ersten Leistungszweig realisiert wird, in einen zweiten, leistungsverzweigten Fahrbereich zunächst die Verbindung zwischen der Ausgangswelle der stufenlos verstellbaren Getriebeeinheit und dem zweiten Getriebeelement geöffnet. Die Verbindung wird dabei bei Erreichen eines synchronen Schaltpunkts getrennt. Gleichzeitig wird die einem herzustellenden Übersetzungsverhältnis des zweiten Fahrbereichs des mechanischen Getriebezweigs zugeordnete Kupplung geschlossen und so eine drehfeste Verbindung zwischen der Eingangsseite des mechanischen Getriebezweigs und dem dritten Getriebeelement des Summiergetriebes hergestellt.

Zum Wechsel von dem nun eingestellten zweiten Fahrbereich in einen dritten Fahrbereich wird die geschlossene Kupplung des mechanischen Getriebezweigs geöffnet und die zweite, mit der einzulegenden Übersetzungsstufe des dritten, ebenfalls leistungsverzweigten Fahrbereichs gekoppelte Kupplung geschlossen. Dies erfolgt bei Erreichen eines asynchronen Schaltpunkts.

Das erfindungsgemäße Vorgehen hat den Vorteil, dass einerseits zwischen einem ersten, rein durch den ersten Leistungszweig realisierten Fahrbereich in einen leistungsverzweigten Fahrbereich schaltruckfrei und vor allen Dingen zugkraftunterbrechungsfrei gewechselt werden kann. Ein solcher Übergang zwischen einem ersten Fahrbereich und einem zweiten Fahrbereich tritt häufig im Arbeitseinsatz mit solchen Antriebssystemen ausgerüsteter Arbeitsmaschinen auf. Dagegen können durch Verwendung des mechanischen Getriebezweigs mit wenigstens zwei Kupplungen in dem zweiten Leistungszweig im leistungsverzweigten Betrieb praktisch beliebig viele weitere Fahrbereiche definiert werden. Dadurch lässt sich die Gesamtspreizung der Übersetzung des Antriebssystems deutlich erhöhen. In den weiteren Fahrbereichen kommt es dabei nicht mehr so auf den ruckfreien und zugkraftunterbrechungsfreien Wechsel an. Hier erleichtert die Ausbildung des erfindungsgemäßen Antriebssystems das Ergänzen weiterer Übersetzungsstufen. Insbesondere wird auch bei einer Mehrzahl von weiteren Übersetzungsstufen keine komplexere konstruktive Ausbildung des Summiergetriebes nötig. Es reicht in jedem Fall, dieses als einfaches Planetengetriebe, d.h. als Planetengetriebe mit nur einem Radsatz, auszuführen.

In den Unteransprüchen sind vorteilhafte Weiterbildungen des erfindungsgemäßen Antriebssystems und des erfindungsgemäßen Verfahrens ausgeführt.

Insbesondere ist es vorteilhaft, den mechanischen Getriebezweig als Doppelkupplungsgetriebe auszuführen.

Wie es bereits erläutert wurde, ist es besonders vorteilhaft, das Summiergetriebe als einfaches Planetengetriebe mit lediglich einem Radsatz auszubilden. Dabei ist es besonders bevorzugt, wenn das erste Getriebeelement das Sonnenrad des Planetengetriebes und das zweite Getriebeelement der Steg des Planetengetriebes ist.

Als stufenlos verstellbare Getriebeeinheit ist es besonders bevorzugt, ein hydrostatisches Getriebe zu verwenden. Dabei ist das hydrostatische Getriebe so ausgeführt, dass zumindest die Hydropumpe als verstellbare Einheit ausgeführt ist. Der Hydromotor ist vorzugsweise ein Konstantmotor, da Konstantmotoren einen besonders hohen Wirkungsgrad aufweisen.

Der mechanische Leistungszweig weist vorzugsweise eine erste Kupplung und eine zweite Kupplung auf, über die eine Eingangswelle mit einer ersten Kupplungswelle bzw. über die zweite Kupplung mit einer zweiten Kupplungswelle verbindbar ist. Die Trennung erfolgt dabei über die Getriebewellen eingangsseitig. Nachfolgend schließen sich bevorzugt zwischen der ersten Kupplungswelle und der Ausgangswelle die erste Übersetzungsstufe für die erste Fahrtrichtung an. Die zweite Kupplungswelle wird dagegen über eine Übersetzungsstufe für die entgegengesetzte Fahrtrichtung mit der Ausgangswelle verbunden. Es ist jedoch bevorzugt, wenn jeweils zwischen der ersten Kupplungswelle und der Ausganswelle bzw. zwischen der zweiten Kupplungswelle und der Ausgangswelle noch weitere Fahrstufen vorgesehen sind. Insbesondere kann zwischen der zweiten Kupplungswelle und der Ausgangswelle wenigstens eine zweite Übersetzungsstufe für die erste Fahrtrichtung vorgesehen sein. Zum Wechsel zwischen der Übersetzungsstufe für die entgegengesetzte Fahrtrichtung und der zweiten Übersetzungsstufe für die erste Fahrtrichtung sind die jeweiligen Losräder der beiden Übersetzungsstufen mittels einer Schaltmuffe wechselweise mit der zweiten Kupplungswelle verbindbar.

Soll dagegen auch für die entgegen gesetzte Fahrtrichtung, in der Regel also die Rückwärtsfahrtrichtung, mehr als eine Übersetzungsstufe im mechanischen Leitungszweig vorhanden sein, so wird auch zwischen der ersten Kupplungswelle und der Ausgangswelle eine weitere Übersetzungsstufe für diese entgegen gesetzte Fahrtrichtung vorgesehen. Während bei lediglich einer Übersetzungsstufe für die Rückwärtsfahrt die erste Übersetzungsstufe permanent drehfest mit der ersten Kupplungswelle verbunden sein kann, wird im Falle von wenigstens einer weiteren Übersetzungsstufe für die entgegen gesetzte Fahrtrichtung für die erste Übersetzungsstufe sowie für die weitere Übersetzungsstufe wiederum jeweils ein Losrad vorgesehen. Diese Losräder sind dann wiederum wechselweise mittels einer Schaltmuffe drehfest mit der ersten Kupplungswelle verbindbar. Es ist selbsterklärend, dass zusätzlich weitere Übersetzungsstufen für die Vorwärts- und Rückwärtsfahrt vorgesehen sein können.

Das erfindungsgemäße Verfahren weist vorzugsweise zudem einen Verfahrensschritt auf, mit dem bei einem Wechsel zwischen dem zweiten und dritten Fahrbereich eine Anpassung des Übersetzungsverhältnisses der stufenlos einstellbaren Getriebeeinheit vorgenommen wird. Im Falle einer verstellbaren Hydropumpe wird hierzu der Schwenkwinkel der Hydropumpe eingestellt. Insbesondere sind die Übersetzungsverhältnisse so gewählt, dass bei Erreichen des asynchronen Schaltpunkts zum Wechsel des zweiten in den dritten Fahrbereich die Pumpe auf ihren zweiten Extremwert verschwenkt wird. Die Pumpe ist vorzugsweise in zwei Förderrichtungen betreibbar. Auf diese Weise lässt sich ein großer Geschwindigkeitsbereich mit dem Antriebssystem realisieren.

Das erfindungsgemäße Antriebssystem ist insbesondere für Fahrantriebe vorgesehen. Nachfolgend werden die Funktion und die Details des Antriebssystems noch eingehend am Beispiel eines solchen Fahrantriebs geschildert. Grundsätzlich ist das Antriebssystem mit der Leistungsverzweigung jedoch auch für andere Antriebe einsetzbar.

Ein bevorzugtes Ausführungsbeispiel ist in der Zeichnung gezeigt und wird in der nachfolgenden Beschreibung näher erläutert. Es zeigen:
- Fig. 1: eine schematische Darstellung des erfindungsgemäßen Antriebssystems;
- Fig. 2: ein Diagramm zur Erläuterung der Abtriebsdrehzahlen der verstellbaren Getriebeeinheit und des Antriebssystems in den einzelnen Fahrbereichen; und
- Fig. 3: eine vereinfachte Darstellung des Ablaufs bei einer Beschleunigung mit zwei Fahrbereichswechseln.

Das erfindungsgemäße Antriebssystem 1 wird bevorzugt für einen Fahrantrieb eingesetzt. Eingangsseitig ist ein Antriebsmotor 2 vorgesehen. In der Regel ist ein solcher Antriebsmotor 2 als Brennkraftmaschine, insbesondere Dieselbrennkraftmaschine ausgeführt. Ausgangsseitig ist eine Abtriebswelle 23 vorgesehen, die das erfindungsgemäße Antriebssystem 1 mit beispielsweise einer angetriebenen Fahrzeugachse verbindet.

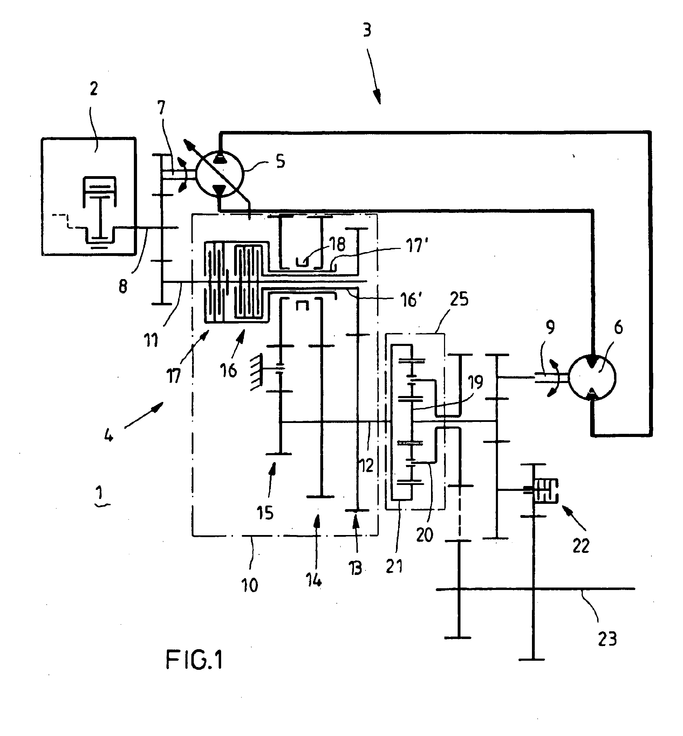

Das Antriebssystem 1 weist einen ersten Leistungszweig auf, der als stufenlos verstellbare Getriebeeinheit ausgebildet ist. Im dargestellten Ausführungsbeispiel ist die stufenlos verstellbare Getriebeeinheit ein hydrostatisches Getriebe 3. Der zweite Leistungszweig 4 ist ein mechanischer Leistungszweig. Das hydrostatische Getriebe 3 weist eine verstellbare Hydropumpe 5 und einen Konstantmotor 6 auf. Die Hydropumpe 5 und der Konstantmotor 6 sind im geschlossenen Kreis über zwei Arbeitsleitungen miteinander verbunden. Die bezüglich eines hydrostatischen Getriebes 3 an sich bekannten Elemente sind zur Vereinfachung in der Fig. 1 nicht dargestellt. Dies betrifft insbesondere die Verstellvorrichtung für die Hydropumpe 5.

Die Hydropumpe 5 wird über eine Pumpenwelle 7 angetrieben. Die Pumpenwelle 7 ist über eine Übersetzungsstufe permanent mit einer Abtriebswelle 8 des Antriebsmotors 2 verbunden.

Der erste Leistungszweig und der zweite Leistungszweig werden ausgangsseitig über ein Summiergetriebe 25 miteinander gekoppelt. Zum Zuführen des Abtriebsmoments, welches über den ersten Leistungszweig bzw. dort den Hydromotor 6 erzeugt wird, ist die Ausgangswelle 9 des Hydromotors 6 mit dem Summiergetriebe 25 verbunden.

Der zweite Leistungszweig 4 wird durch einen mechanischen Getriebezweig, im gezeigten Ausführungsbeispiel ein Doppelkupplungsgetriebe 10, gebildet. Das Doppelkupplungsgetriebe 10 ist eingangsseitig ebenfalls permanent mit dem Antriebsmotor 2 verbunden. Über eine zweite Übersetzungsstufe ist hierzu die Eingangswelle 11 des Doppelkupplungsgetriebes 10 mit der Abtriebswelle 8 des Antriebsmotors 2 verbunden.

Ausgangsseitig ist eine Ausgangswelle 12 des Doppelkupplungsgetriebes 10 mit dem Summiergetriebe 25 verbunden. Das Summiergetriebe 25 weist daher zwei Eingänge auf, die einerseits permanent mit dem Hydromotor 6 und andererseits permanent mit der Ausgangswelle 12 des Doppelkupplungsgetriebes 10 verbunden sind. Auf die genaue Ausbildung des Summiergetriebes 25 und den Anschluss an die Abtriebswelle 23 des Antriebssystems 1 wird nachfolgend noch im Detail eingegangen.

Um verschiedene Übersetzungen für die zumindest zwei leistungsverzweigten Fahrbereiche realisieren zu können, sind in dem Doppelkupplungsgetriebe 10 zumindest eine erste Übersetzungsstufe 13 und eine zweite Übersetzungsstufe 14 ausgebildet. Beide Übersetzungsstufen 13, 14 sind permanent mit der Ausgangswelle 12 des Doppelkupplungsgetriebes 10 verbunden. Um die jeweils einzulegende Übersetzungsstufe mit einer Eingangswelle 11 des Doppelkupplungsgetriebes 10 zu verbinden, ist eine erste Kupplung 16 bzw. eine zweite Kupplung 17 vorgesehen. Die beiden Kupplungen 16, 17 sind mit jeweils einer Kupplungswelle 16', 17' verbunden.

Im dargestellten Ausführungsbeispiel ist zusätzlich zu den beiden Übersetzungsstufen 13, 14 noch eine weitere für Rückwärtsfahrt vorgesehene Übersetzungsstufe 15 vorhanden. Um zwischen der zweiten Übersetzungsstufe 14 und der Übersetzungsstufe für Rückwärtsfahrt 15 zu wechseln, ist eine Schaltmuffe 18 vorgesehen, mit der jeweils ein Losrad der Übersetzungsstufe für Rückwärtsfahrt 15 oder der zweiten Übersetzungsstufe 14 drehfest mit der zweiten Kupplungswelle 17' verbunden werden kann. Durch die Anordnung der Schaltmuffe 18 zwischen der zweiten Übersetzungsstufe 14 und der Übersetzungsstufe 15 für Rückwärtsfahrt kann ohne Betätigung der Schaltmuffe 18 zwischen Vorwärtsfahrt und Rückwärtsfahrt in den jeweils ersten beiden Fahrbereichen gewechselt werden. Dagegen ist die erste Übersetzungsstufe 13 permanent mit der ersten Kupplungswelle 16' verbunden. Zum Wechseln des Übersetzungsverhältnisses des Doppelkupplungsgetriebes 10 wird bei drehfester Verbindung der ersten Übersetzungsstufe 13 mit der ersten Kupplungswelle 16' jeweils eine der Kupplungen 16, 17 geöffnet, während die andere geschlossen wird. Es sind jedoch in dem Doppelkupplungsgetriebe 10 auch beide Kupplungen 16, 17 gleichzeitig zu öffnen. Damit kann ein rein hydrostatischer erster Fahrbereich realisiert werden.

Das Summiergetriebe 25 ist als einfaches Planetengetriebe ausgeführt. Einfaches Planetengetriebe bedeutet dabei, dass lediglich ein Radsatz vorhanden ist. Dieser Radsatz enthält als erstes Getriebeelement ein Sonnenrad 19, als zweites Getriebeelement einen Steg 20 und als drittes Getriebeelement ein Hohlrad 21. Das Hohlrad 21 ist permanent drehfest mit der Ausgangswelle 12 des Doppelkupplungsgetriebes 10 verbunden. Das Sonnenrad 19 ist permanent drehfest mit der Ausgangswelle 9 des Hydromotors 6 verbunden. Der Steg 20 ist permanent drehfest mit der Abtriebswelle 23 des Antriebssystems 1 verbunden.

Die Ausgangswelle 9 lässt sich zudem über eine Kupplung 22 ebenfalls mit der Abtriebswelle 3 drehfest verbinden. In dem dargestellten Ausführungsbeispiel ist zu erkennen, dass die Ausgangswelle 9 des Hydromotors 6 über eine Übersetzungsstufe auf das Sonnenrad 19 wirkt. Ferner ist eine weitere Übersetzungsstufe zwischen der Sonnenradwelle und der Eingangsseite der Kupplung 22 vorgesehen. Die Kupplung 22 wirkt ausgangsseitig wiederum über eine weitere Übersetzungsstufe mit der Abtriebswelle 3 zusammen. Die gesamte Übersetzung von der Ausgangswelle 9 bei geschlossener Kupplung 22 zur Abtriebswelle 23 wird mit in bezeichnet. Das Übersetzungsverhältnis zwischen dem Steg 20 und der Abtriebswelle 3 wird mit i_{St} bezeichnet.

In einem ersten, nicht leistungsverzweigten Fahrbereich, der rein durch das hydrostatische Getriebe 3 realisiert wird, sind die beiden Kupplungen 16, 17 des Doppelkupplungsgetriebes 10 geöffnet. Die Kupplung 22 ist dagegen geschlossen. Damit ist die Ausgangswelle 9 des Hydromotors 6 nicht nur über eine einfache Übersetzung mit dem Sonnenrad 19, sondern auch über die Übersetzungen i_{H} und i_{St} mit dem Steg 20 drehfest verbunden. Entsprechend dem Übersetzungsverhältnis des Summiergetriebes 25 stellt sich somit an dem Hohlrad 21 eine resultierende Drehzahl ein. Diese resultierende Drehzahl ist abhängig von der Drehzahl der Ausgangswelle 9 und den Übersetzungsverhältnissen. Die Übersetzungsverhältnisse, insbesondere das Übersetzungsverhältnis ist des Stegs zur Abtriebswelle 23 wird so gewählt, dass bei annähernd maximaler Übersetzung des hydrostatischen Getriebes 3, was dem eingestellten maximalen Fördervolumen der Hydropumpe 5 entspricht, eine Synchronbedingung für den Wechsel in den zweiten Fahrbereich vorliegt. Bei dieser Synchronbedingung muss die erste Kupplungswelle 16' mit einer zur Eingangswelle des Doppelkupplungsgetriebes 10 identischen Drehzahl rotieren. In diesem Zustand kann ein Wechsel von dem ersten rein hydrostatischen Fahrbereich auf einen leistungsverzweigten Betrieb erfolgen. Der Schaltpunkt ist synchron und der Übergang wird durch Öffnen der Kupplung 22 und gleichzeitiges Schließen der ersten Kupplung 16 des Doppelkupplungsgetriebes 10 erzeugt. Das Übersetzungsverhältnis der verstellbaren Getriebeeinheit bleibt dabei konstant. In dieser Betriebssituation steht die Hydropumpe 5 nahe ihrem maximalen Fördervolumen. Durch nachfolgende Reduktion des Fördervolumens der Hydropumpe 5 in dem zweiten Fahrbereich und damit Reduzierung der Drehzahl der Ausgangswelle 9 des Hydromotors 6 wird auch die Drehzahl des Sonnenrads 19 verringert. Dadurch kommt es zu einer Beschleunigung des Stegs 20 und somit letztlich der Abtriebswelle 23. Die Beschleunigung erfolgt dabei bei konstanter Drehzahl der Ausgangswelle 12 des Doppelkupplungsgetriebes 10.

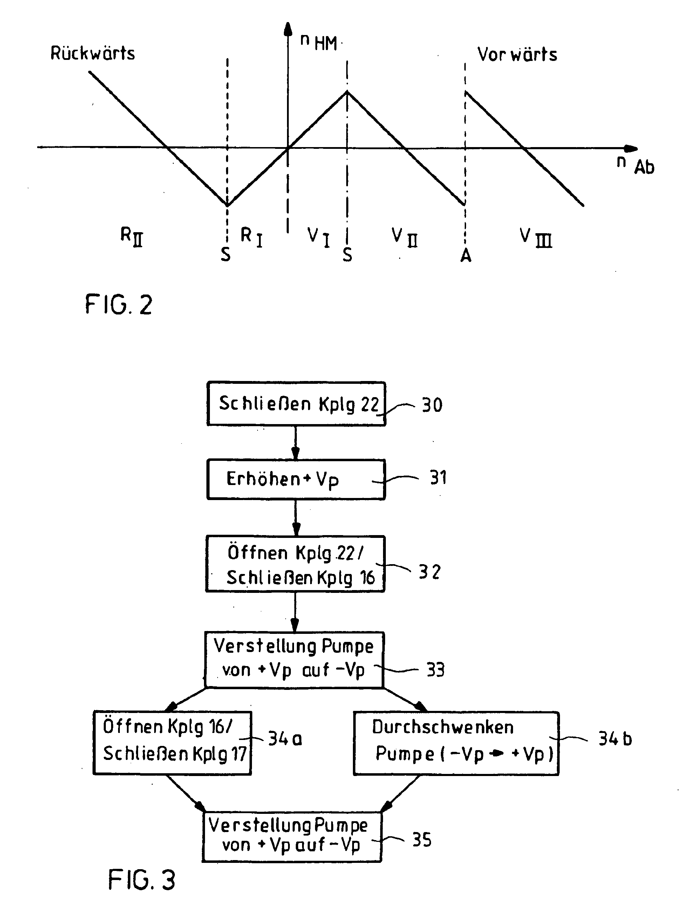

Die Hydropumpe 5 ist vorzugsweise über ihre Nulllage hinaus verschwenkbar, so dass zur weiteren Beschleunigung bei Erreichen der Nulllage eine Drehrichtungsumkehr des Hydromotors 6 bewirkt wird. Die Hydropumpe 5 wird hier weiter in Richtung ihres maximalen Fördervolumens in der zweiten Förderrichtung eingestellt. Bei Erreichen der maximalen Fördermenge der Hydropumpe 5 ist dann der asynchrone Schaltpunkt zum Wechseln von dem zweiten Fahrbereich in den dritten Fahrbereich erreicht. Die Kupplung 22 bleibt bei diesem Wechsel weiterhin geöffnet und es wird die erste Kupplung 16 des Doppelkupplungsgetriebes 10 geöffnet und gleichzeitig die zweite Kupplung 17 des Doppelkupplungsgetriebes 10 geschlossen. Entsprechend den unterschiedlichen Übersetzungsverhältnissen der ersten Übersetzungsstufe 13 und der zweiten Übersetzungsstufe 14 muss beim Wechsel zwischen der ersten Kupplung 16 und der zweiten Kupplung 17 die Drehzahl der Ausgangswelle 12 angepasst werden. Hierzu wird gleichzeitig die Hydropumpe 5 wieder durchgeschwenkt und auf maximale Fördermenge in der entgegengesetzten Richtung eingestellt. Die zu kompensierenden Drehzahlunterschiede an den Kupplungen 16, 17 beim Wechsel werden somit minimiert. Dennoch tritt beim asynchronen Schaltpunkt zunächst Schlupf an der zu schließenden Kupplung, gegen Ende des Schaltvorgangs an der zu öffnenden Kupplung auf. Bevorzugt gibt es daher ein Zeitfenster, in dem beide Kupplungen 16, 17 leicht geöffnet sind und Schlupf auftreten kann. Dieses Zeitfenster wird genutzt, um die Hydropumpe 5 zu verschwenken. In dem dritten Fahrbereich ist dann wieder ein Beschleunigen der Abtriebswelle 23 möglich, indem die Hydropumpe 5 wieder zunächst in Richtung eines verschwindenden Fördervolumens und dann weiter in Richtung eines maximalen, entgegengesetzt gerichteten Volumenstroms verstellt wird. Eine schematische Darstellung der Schaltwechsel und der Drehzahlen des Hydromotors 6 über der Abtriebswellendrehzahl ist vereinfacht noch einmal in der Fig. 2 dargestellt.

Um die Fahrbereiche in entgegengesetzter Richtung zu wechseln, werden die beschriebenen Abläufe entsprechend in umgekehrter Reihenfolge durchlaufen.

Es ist noch zu bemerken, dass auch für Rückwärtsfahrt der Fahrbereichswechsel zwischen dem ersten rein hydrostatischen Fahrbereich und dem zweiten Fahrbereich mit der Übersetzungsstufe 15 synchron erfolgen kann. Das Übersetzungsverhältnis für Rückwärtsfahrt und Vorwärtsfahrt ist dabei vorzugsweise gleich. Die ersten Fahrbereiche für Vorwärts- (V_{I}) und Rückwärtsfahrt (R_{I}) sowie die zweiten Fahrbereiche für Vorwärts- (V_{II}) und Rückwärtsfahrt (R_{II}) entsprechen sich dann vollkommen. Dabei ist die Schaltmuffe 18 nicht mit der zweiten Übersetzungsstufe 14 für den dritten Fahrbereich, sondern mit der Übersetzungsstufe 15 für Rückwärtsfahrt drehfest mit der zweiten Kupplungswelle 17' verbunden. Die Drehrichtung des Hydromotors 6 ist dadurch entgegengesetzt. Es ist dabei selbstredend keine Limitierung auf lediglich einen ersten und einen zweiten Fahrbereich in Rückwärtsrichtung erforderlich. Vielmehr ist in gleicher Weise, wie dies zuvor bereits für Vorwärtsfahrt beschrieben wurde, eine Erweiterung der Spreizung des Übersetzungsverhältnisses des gesamten Antriebssystems durch Hinzunahme weiterer Fahrbereiche für Rückwärtsfahrt mittels des Doppelkupplungsgetriebes 10 möglich.

In der Fig. 2 ist der Verlauf der sich aus dem eingestellten Fördervolumen der Pumpe 5 ergebenden Hydromotordrehzahlen n_{HM} über der Drehzahl n_{ab} der Abtriebswelle 23 dargestellt. Es ist zu erkennen, dass beim Übergang des ersten Fahrbereichs in Vorwärtsrichtung V_{I} zu dem zweiten Fahrbereich in Vorwärtsrichtung V_{II} kein Sprung in der Hydromotordrehzahl n_{HM} auftritt. Dagegen ist in dem asynchronen Schaltpunkt beim Übergang der Fahrbereiche V_{II} zu V_{III} ein Sprung in der Drehzahl des Hydromotors N_{HM} zu erkennen. Dies wird durch schnelles Durchschwenken der Hydropumpe 5 erreicht. In entsprechender Weise ist auch für die Rückwärtsfahrt der synchrone Schaltpunkt dargestellt. Beim Reversieren, d. h. also dem Wechseln zwischen Vorwärts- und Rückwärtsfahrt in dem ersten Fahrbereich R_{I}/V_{I} ist dagegen überhaupt kein Schalten erforderlich. In diesem rein hydrostatischen ersten Fahrbereich wird allein über die Verstellung der Fördermenge und -richtung der Hydropumpe 5 sowohl die Fahrgeschwindigkeit als auch die Fahrtrichtung bestimmt.

Eine vereinfachte Darstellung des erfindungsgemäßen Verfahrens ist noch einmal in Fig. 3 zu erkennen. Zunächst wird in Schritt 30 die Kupplung 22 geschlossen. Während die Kupplungen 16, 17 des Doppelkupplungsgetriebes 10 offen sind, ist nun in dem ersten Fahrbereich Vorwärts- und Rückwärtsfahrt (V_{I}/R_{I}) rein hydrostatisch möglich. Im weiteren wird eine Beschleunigung in Vorwärtsrichtung beschrieben. Es ist selbsterklärend, dass dies analog auch für die Rückwärtsrichtung erfolgen kann.

Zur Erhöhung der Drehzahl n_{ab} der Abtriebswelle 23 wird die Fördermenge der Hydropumpe 5 in Richtung ihres maximalen Fördervolumens +V_{P} in der ersten Förderrichtung verstellt (Schritt 31). Bei Erreichen der maximalen Fördermenge +V_{P} der Hydropumpe 5 wird dann zum Fahrbereichswechsel in den zweiten Fahrbereich V_{II} die Kupplung 22 geöffnet und somit die Verbindung zwischen der Ausgangswelle 9 und der Abtriebswelle 23 unterbrochen. Gleichzeitig wird die erste Kupplung 16 des Doppelkupplungsgetriebes 10 geschlossen und so eine Verbindung der Eingangswelle 11 mit der Ausgangswelle 12 des Doppelkupplungsgetriebes 10 über die erste Übersetzungsstufe 13 (Schritt 32) hergestellt. Bei diesem Fahrbereichswechsel ist aufgrund des synchronen Schaltpunkts eine Verstellung der Fördermenge der Hydropumpe 5 nicht erforderlich. Dies ist auch an dem Verlauf der Drehzahl n_{HM} in der Fig. 2 zu erkennen. Zur weiteren Beschleunigung wird anschließend die Hydropumpe 5 von ihrem maximalen Fördervolumen in der ersten Richtung +V_{P} in Richtung auf ihr maximales Fördervolumen in der entgegengesetzten Förderrichtung -V_{P} verstellt (Schritt 33). Ist das maximale Fördervolumen (-V_{P}) in der entgegengesetzten zweiten Förderrichtung erreicht, so ist auch der asynchrone Schaltpunkt des Fahrbereichswechsels von V_{II} auf V_{III} erreicht.

Hier wird die erste Kupplung 16 geöffnet und die zweite Kupplung 17 des Doppelkupplungsgetriebes 10 geschlossen (Schritt 34a). Damit wird auf die zweite Übersetzungsstufe 14 des Doppelkupplungsgetriebes 10 umgeschaltet, wobei hierzu die Schaltmuffe 18 die zweite Übersetzungsstufe 14 drehfest mit der zweiten Kupplungswelle verbindet. Theoretisch wäre es denkbar, dass ohne Verstellung der Drehzahl des Hydromotors 6 eine weitere Beschleunigung durch diesen Wechselprozess beim Öffnen und Schließen der Kupplungen 16, 17 durchgeführt wird. Dies würde aber zu einem Schleifen der Kupplung 17 bis zum Erreichen der maximalen Fahrgeschwindigkeit führen. Um dies zu verhindern, wird die Pumpe 5 stattdessen schnell durchgeschwenkt, d. h. in möglichst kurzer Zeit von -V_{P} auf +V_{P} verstellt (Schritt 34b). Das Durchschwenken der Hydropumpe 5 und das Öffnen und Schließen der Kupplungen 16 und 17 erfolgt gleichzeitig in den Verfahrensschritten 34a und 34b. Zum weiteren Beschleunigen wird anschließend die Pumpe 5, die nach Abschluss des Schaltvorgangs vom Fahrbereich 2 in den Fahrbereich 3 auf ihrem maximalen Fördervolumen in der ersten Förderrichtung steht, wieder von +V_{P} auf -V_{P} verstellt.

Die vorstehenden Ausführungen betreffen jeweils eine Beschleunigung aus dem Stillstand in Vorwärtsrichtung über alle drei Fahrbereiche hinweg. Es ist leicht ersichtlich, dass in analoger Weise auch bei Rückwärtsfahrt die Fahrbereiche gewechselt werden können und dass zum Wechseln der Fahrbereiche von III auf II bzw. von II auf I die Schritte in umgekehrter Reihenfolge durchgeführt werden müssen.

Die Erfindung ist nicht auf das dargestellte Ausführungsbeispiel beschränkt. Vielmehr sind auch einzelne Elemente und Merkmale der vorliegenden Erfindung vorteilhaft miteinander kombinierbar. Insbesondere kann das Doppelkupplungsgetriebe auch mehr oder weniger Übersetzungsstufen aufweisen.

## Patentansprüche

1. Antriebssystem mit einer Abtriebswelle (23), mit einem ersten Leistungszweig, welcher eine stufenlos verstellbare Getriebeeinheit (3) aufweist, und mit einem zweiten Leistungszweig (4), wobei der erste Leistungszweig und der zweite Leistungszweig (4) über ein Summiergetriebe (25) verbunden sind, das ein erstes Getriebeelement (19), das mit einer Ausgangswelle (9) der verstellbaren Getriebeeinheit (3) drehfest verbunden ist, ein zweites Getriebeelement (20), mit dem die Abtriebswelle (23) drehfest verbunden ist, und ein drittes Getriebeelement (21) aufweist, und wobei der zweite Leistungszweig (4) ein mechanischer Getriebezweig mit verschiedenen über Kupplungen (16, 17) auswählbaren festen Übersetzungen ist und eine Ausgangswelle (12) besitzt, die drehfest mit dem dritten Getriebeelement (21) verbunden ist,
**dadurch gekennzeichnet,**
**dass** die verstellbare Getriebeeinheit (3) über eine Kupplung (22) drehfest mit der Abtriebswelle (23) verbindbar ist und die Abtriebswelle (23) über eine Getriebestufe permanent drehfest mit dem zweiten Getriebeelement (20) verbunden ist, wobei sich für das dritte Getriebeelement (21) bei geschlossener Kupplung (22) eine sich mit der Drehzahl der Abtriebswelle (23) ändernde Drehzahl ergibt.

2. Antriebssystem nach Anspruch 1, **dadurch gekennzeichnet, dass** der zweite Leistungszweig ein Doppelkupplungsgetriebe (10) umfasst.

3. Antriebssystem nach Anspruch 1 oder 2, **dadurch gekennzeichnet, dass** das Summiergetriebe (25) ein einstufiges Planetengetriebe ist.

4. Antriebssystem nach Anspruch 3, **dadurch gekennzeichnet, dass** das erste Getriebeelement (19) ein Sonnenrad des Planetengetriebes ist und das zweite Getriebeelement (20) ein Steg des Planetengetriebes ist.

5. Antriebssystem nach einem der Ansprüche 1 bis 4, **dadurch gekennzeichnet, dass** die verstellbare Getriebeeinheit (3) ein hydrostatisches Getriebe ist.

6. Antriebssystem nach einem der Ansprüche 1 bis 5, **dadurch gekennzeichnet, dass** durch die erste Kupplung (16) eine Eingangswelle (11) mit einer ersten Kupplungswelle (16') und durch die zweite Kupplung (17) die Eingangswelle (11) mit einer zweiten Kupplungswelle (17') verbindbar ist.

7. Antriebssystem nach Anspruch 6, **dadurch gekennzeichnet, dass** eine erste Übersetzungsstufe (13) für eine erste Fahrtrichtung zwischen der ersten Kupplungswelle (16') und der Ausgangswelle (12) angeordnet ist und dass eine Übersetzungsstufe (15) für eine entgegengesetzte zweite Fahrtrichtung zwischen der zweiten Kupplungswelle (17') und der Ausgangswelle (12) angeordnet ist.

8. Antriebssystem nach Anspruch 7, **dadurch gekennzeichnet, dass** zwischen der zweiten Kupplungswelle (17') und der Ausgangswelle (12) wenigstens eine zweite Übersetzungsstufe für die erste Fahrtrichtung vorgesehen ist.

9. Antriebssystem nach Anspruch 8, **dadurch gekennzeichnet, dass** zum Wechsel zwischen der Übersetzungsstufe (15) für die entgegengesetzte Fahrtrichtung und der zweiten Übersetzungsstufe (14) der ersten Fahrtrichtung jeweils ein Losrad mittels einer Schaltmuffe drehfest mit der zweiten Kupplungswelle (17') verbindbar ist.

10. Antriebssystem nach einem der Ansprüche 8 oder 9, **dadurch gekennzeichnet, dass** für die entgegengesetzte Fahrtrichtung eine weitere Übersetzungsstufe vorgesehen ist, die wiederum zwischen der ersten Kupplungswelle (16) und der Ausgangswelle (12) angeordnet ist.

11. Antriebssystem nach Anspruch 10, **dadurch gekennzeichnet, dass** zum Wechsel zwischen der ersten Übersetzungsstufe (13) und der weiteren Übersetzungsstufe für die entgegen gesetzte Fahrtrichtung jeweils ein Losrad mittels einer Schaltmuffe drehfest mit der ersten Kupplungswelle (16') verbindbar ist.

12. Verfahren zum Wechseln von Fahrbereichen eines Antriebssystems (1) mit einer Abtriebswelle (23), mit einem ersten Leistungszweig, welcher eine stufenlos verstellbare Getriebeeinheit (3) aufweist, und mit einem zweiten Leistungszweig (4), wobei der erste Leistungszweig und der zweite Leistungszweig (4) mit einem Summiergetriebe (25) verbunden sind, das ein erstes Getriebeelement (19), das mit einer Ausgangswelle (9) der verstellbaren Getriebeeinheit (3) drehfest verbunden ist, ein zweites Getriebeelement (20), mit dem die Abtriebswelle (23) drehfest verbunden ist, und ein drittes Getriebeelement (21) aufweist, wobei der zweite Leistungszweig (4) ein mechanischer Getriebezweig mit verschiedenen über Kupplungen (16, 17) auswählbaren festen Übersetzungen ist und eine Ausgangswelle (12) besitzt, die drehfest mit dem dritten Getriebeelement (21) verbunden ist, wobei die verstellbare Getriebeeinheit (3) über eine Kupplung (22) drehfest mit der Abtriebswelle (23) verbindbar ist und die Abtriebswelle (23) über eine Getriebestufe permanent drehfest mit dem zweiten Getriebeelement (20) verbunden ist und wobei sich für das dritte Getriebeelement (21) bei geschlossener Kupplung (22) eine sich mit der Drehzahl der Abtriebswelle (23) ändernde Drehzahl ergibt,
mit folgenden Verfahrensschritten:
- Erhöhen eines Übersetzungsverhältnisses der verstellbaren Getriebeeinheit (3; Schritt 31) in einem ersten Fahrbereich bei hergestellter Verbindung der Ausgangswelle (9) der verstellbaren Getriebeeinheit (3) mit dem zweiten Getriebeelement (20) bis zum Erreichen eines Drehzahlverhältnisses der Ausgangswelle (12) des mechanischen Getriebezweigs zu einer Eingangswelle (11) des mechanischen Getriebezweigs (10), das dem Übersetzungsverhältnis des mechanischen Getriebezweigs (10) in dem einzustellenden zweiten Fahrbereich entspricht,
- Trennen einer Verbindung der Ausgangswelle (9) der verstellbaren Getriebeeinheit (3) mit dem zweiten Getriebeelement (20) und Verbinden einer Eingangswelle (11) des mechanischen Getriebezweigs (10) mit der Ausgangswelle (12) des mechanischen Getriebezweigs (Schritt 32) über eine erste, den einzustellenden zweiten Fahrbereich definierende Übersetzungsstufe (13) mit dem dritten Getriebeelement (21),
- Trennen der Verbindung der Ausgangswelle (12) des mechanischen Getriebezweigs mit der Eingangswelle (11) des mechanischen Getriebezweigs über die erste Übersetzungsstufe und Verbinden der Ausgangswelle (12) des mechanischen Getriebezweigs (Schritt 34a) mit der Eingangswelle (11) des mechanischen Getriebezweigs (10) über eine zweite Übersetzungsstufe (14), die einen dritten Fahrbereich definiert, zum Wechseln von dem zweiten in den dritten Fahrbereich.

13. Verfahren nach Anspruch 12, **dadurch gekennzeichnet, dass** während des Trennens der Verbindung der Ausgangswelle (12) des mechanischen Getriebezweigs (10) mit der Eingangswelle (11) des mechanischen Getriebezweigs (10) über die erste Übersetzungsstufe (13) und des Verbindens der Ausgangswelle (12) des mechanischen Getriebezweigs (10) mit der Eingangswelle (11) des mechanischen Getriebezweigs (10) über eine zweite Übersetzungsstufe (14), die den dritten Fahrbereich definiert, eine Drehzahlanpassung des ersten Getriebeelements (19) durch Einstellung des Übersetzungsverhältnisses der verstellbaren Getriebeeinheit (3) durchgeführt wird (Schritt 34b).

14. Verfahren nach Anspruch 13, **dadurch gekennzeichnet, dass** zur Einstellung des Übersetzungsverhältnisses ein Fördervolumen einer Hydropumpe (5) eines die verstellbare Getriebeeinheit (3) bildenden hydrostatischen Getriebes eingestellt wird.

## Claims

1. Drive system having a driven shaft (23), having a first power branch which has an infinitely adjustable transmission unit (3), and having a second power branch (4), the first power branch and the second power branch (4) being connected via a summing transmission (25) which has a first transmission element (19) which is connected in a rotationally fixed manner to an output shaft (9) of the adjustable transmission unit (3), a second transmission element (20) to which the driven shaft (23) is connected in a rotationally fixed manner, and a third transmission element (21), and the second power branch (4) being a mechanical transmission branch with different fixed transmission ratios which can be selected via clutches (16, 17), and having an output shaft (12) which is connected in a rotationally fixed manner to the third transmission element (21), **characterized in that** the adjustable transmission unit (3) can be connected in a rotationally fixed manner to the driven shaft (23) via a clutch (22), and the driven shaft (23) is connected permanently in a rotationally fixed manner to the second transmission element (20) via a gear stage, a rotational speed which changes with the rotational speed of the driven shaft (23) resulting for the third transmission element (21) when the clutch (22) is closed.

2. Drive system according to Claim 1, **characterized in that** the second power branch comprises a dual clutch transmission (10).

3. Drive system according to Claim 1 or 2, **characterized in that** the summing transmission (25) is a single stage planetary gear mechanism.

4. Drive system according to Claim 3, **characterized in that** the first transmission element (19) is a sun gear of the planetary gear mechanism and the second transmission element (20) is a spider of the planetary gear mechanism.

5. Drive system according to one of Claims 1 to 4, **characterized in that** the adjustable transmission unit (3) is a hydrostatic transmission.

6. Drive system according to one of Claims 1 to 5, **characterized in that** an input shaft (11) can be connected to a first clutch shaft (16') by the first clutch (16) and the input shaft (11) can be connected to a second clutch shaft (17') by the second clutch (17).

7. Drive system according to Claim 6, **characterized in that** a first transmission stage (13) for a first driving direction is arranged between the first clutch shaft (16') and the output shaft (12), and **in that** a transmission stage (15) for an opposite second driving direction is arranged between the second clutch shaft (17') and the output shaft (12).

8. Drive system according to Claim 7, **characterized in that** at least one second transmission stage for the first driving direction is provided between the second clutch shaft (17') and the output shaft (12).

9. Drive system according to Claim 8, **characterized in that** in each case one idler gear can be connected in a rotationally fixed manner to the second clutch shaft (17') by means of a selector sleeve for changing between the transmission stage (15) for the opposite driving direction and the second transmission stage (14) of the first driving direction.

10. Drive system according to either of Claims 8 and 9, **characterized in that** a further transmission stage is provided for the opposite driving direction, which further transmission stage is again arranged between the first clutch shaft (16') and the output shaft (12).

11. Drive system according to Claim 10, **characterized in that** in each case one idler gear can be connected in a rotationally fixed manner to the first clutch shaft (16') by means of a selector sleeve for changing between the first transmission stage (13) and the further transmission stage for the opposite driving direction.

12. Method for changing driving ranges of a drive system (1) having a driven shaft (23), having a first power branch which has an infinitely adjustable transmission unit (3), and having a second power branch (4), the first power branch and the second power branch (4) being connected to a summing transmission (25) which has a first transmission element (19) which is connected in a rotationally fixed manner to an output shaft (9) of the adjustable transmission unit (3), a second transmission element (20) to which the driven shaft (23) is connected in a rotationally fixed manner, and a third transmission element (21), the second power branch (4) being a mechanical transmission branch with different fixed transmission ratios which can be selected via clutches (16, 17), and having an output shaft (12) which is connected in a rotationally fixed manner to the third transmission element (21), it being possible for the adjustable transmission unit (3) to be connected in a rotationally fixed manner to the driven shaft (23) via a clutch (22), and the driven shaft (23) being connected permanently in a rotationally fixed manner to the second transmission element (20) via a gear stage, and a rotational speed which changes with the rotational speed of the driven shaft (23) resulting for the third transmission element (21) when the clutch (22) is closed,
having the following method steps:
- increasing a transmission ratio of the adjustable transmission unit (3; step 31) in a first driving range in the case of a produced connection of the output shaft (9) of the adjustable transmission unit (3) to the second transmission element (20) until a rotational speed ratio of the output shaft (12) of the mechanical transmission branch to an input shaft (11) of the mechanical transmission branch (10) is reached, which rotational speed ratio corresponds to the transmission ratio of the mechanical transmission branch (10) in the second driving range to be set,
- disconnecting of a connection of the output shaft (9) of the adjustable transmission unit (3) to the second transmission element (20) and connecting an input shaft (11) of the mechanical transmission branch (10) to the output shaft (12) of the mechanical transmission branch (step 32) via a first transmission stage (13) to the third transmission element (21), which transmission stage (13) defines a second driving range to be set,
- disconnecting of the connection of the output shaft (12) of the mechanical transmission branch to the input shaft (11) of the mechanical transmission branch via the first transmission stage and connecting of the output shaft (12) of the mechanical transmission branch (step 34a) to the input shaft (11) of the mechanical transmission branch (10) via a second transmission stage (14) which defines a third driving range, for changing from the second into the third driving range.

13. Method according to Claim 12, **characterized in that**, during the disconnecting of the connection of the output shaft (12) of the mechanical transmission branch (10) to the input shaft (11) of the mechanical transmission branch (10) via the first transmission stage (13) and the connecting of the output shaft (12) of the mechanical transmission branch (10) to the input shaft (11) of the mechanical transmission branch (10) via a second transmission stage (14) which defines the third driving range, a rotational speed adaptation of the first transmission element (19) is carried out (step 34b) by setting the transmission ratio of the adjustable transmission unit (3).

14. Method according to Claim 13, **characterized in that** a delivery volume of a hydraulic pump (5) of a hydrostatic transmission which forms the adjustable transmission unit (3) is set in order to set the transmission ratio.

## Revendications

1. Système d'entraînement comprenant un arbre de prise de force (23), une première branche de puissance qui présente une unité de transmission (3) à variation continue, et une deuxième branche de puissance (4), la première branche de puissance et la deuxième branche de puissance (4) étant connectées par le biais d'une transmission totalisatrice (25) qui présente un premier élément de transmission (19) qui est connecté de manière solidaire en rotation à un arbre de sortie (9) de l'unité de transmission variable (3), un deuxième élément de transmission (20) auquel est connecté de manière solidaire en rotation l'arbre de prise de force (23), et un troisième élément de transmission (21), la deuxième branche de puissance (4) étant une branche de transmission mécanique avec différents rapports de démultiplication fixes pouvant être sélectionnés par le biais d'embrayages (16, 17) et possédant un arbre de sortie (12) qui est connecté de manière solidaire en rotation au troisième élément de transmission (21),
**caractérisé en ce que**
l'unité de transmission variable (3) peut être connectée de manière solidaire en rotation à l'arbre de prise de force (23) par le biais d'un embrayage (22) et l'arbre de prise de force (23) est connecté de manière solidaire en rotation et permanente au deuxième élément de transmission (20) par le biais d'un étage de transmission, une vitesse de rotation variant avec la vitesse de rotation de l'arbre de prise de force (23) étant obtenue pour le troisième élément de transmission (21) lorsque l'embrayage (22) est fermé.

2. Système d'entraînement selon la revendication 1, **caractérisé en ce que** la deuxième branche de puissance comprend une transmission à double embrayage (10).

3. Système d'entraînement selon la revendication 1 ou 2, **caractérisé en ce que** la transmission totalisatrice (25) est une transmission planétaire à un étage.

4. Système d'entraînement selon la revendication 3, **caractérisé en ce que** le premier élément de transmission (19) est une roue solaire de la transmission planétaire et le deuxième élément de transmission (20) est un porte-satellites de la transmission planétaire.

5. Système d'entraînement selon l'une quelconque des revendications 1 à 4, **caractérisé en ce que** l'unité de transmission variable (3) est une transmission hydrostatique.

6. Système d'entraînement selon l'une quelconque des revendications 1 à 5, **caractérisé en ce qu'**un arbre d'entrée (11) peut être connecté à un premier arbre d'embrayage (16') par le premier embrayage (16) et l'arbre d'entrée (11) peut être connecté à un deuxième arbre d'embrayage (17') par le deuxième embrayage (17).

7. Système d'entraînement selon la revendication 6, **caractérisé en ce qu'**un premier étage de démultiplication (13) pour une première direction de conduite est disposé entre le premier arbre d'embrayage (16') et l'arbre de sortie (12) et **en ce qu'**un étage de démultiplication (15) pour une deuxième direction de conduite opposée est disposé entre le deuxième arbre d'embrayage (17') et l'arbre de sortie (12).

8. Système d'entraînement selon la revendication 7, **caractérisé en ce qu'**entre le deuxième arbre d'embrayage (17') et l'arbre de sortie (12) est prévu au moins un deuxième étage de démultiplication pour la première direction de conduite.

9. Système d'entraînement selon la revendication 8, **caractérisé en ce que** pour le changement entre l'étage de démultiplication (15) pour la direction de conduite opposée et le deuxième étage de démultiplication (14) de la première direction de conduite, un pignon fou peut à chaque fois être connecté au moyen d'un manchon de commande de manière solidaire en rotation au deuxième arbre d'embrayage (17').

10. Système d'entraînement selon l'une quelconque des revendications 8 ou 9, **caractérisé en ce que** pour la direction de conduite opposée est prévu un étage de démultiplication supplémentaire qui est à nouveau disposé entre le premier arbre d'embrayage (16') et l'arbre de sortie (12).

11. Système d'entraînement selon la revendication 10, **caractérisé en ce que** pour le changement entre le premier étage de démultiplication (13) et l'étage de démultiplication supplémentaire pour la direction de conduite opposée, un pignon fou peut à chaque fois être connecté au moyen d'un manchon de commande de manière solidaire en rotation au premier arbre d'embrayage (16').

12. Procédé pour le changement de plages de conduite d'un système d'entraînement (1) comprenant un arbre de prise de force (23), une première branche de puissance qui présente une unité de transmission (3) à variation continue, et une deuxième branche de puissance (4), la première branche de puissance et la deuxième branche de puissance (4) étant connectées par le biais d'une transmission totalisatrice (25) qui présente un premier élément de transmission (19) qui est connecté de manière solidaire en rotation à un arbre de sortie (9) de l'unité de transmission variable (3), un deuxième élément de transmission (20) auquel est connecté de manière solidaire en rotation l'arbre de prise de force (23), et un troisième élément de transmission (21), la deuxième branche de puissance (4) étant une branche de transmission mécanique avec différents rapports de démultiplication fixes pouvant être sélectionnés par le biais d'embrayages (16, 17) et possédant un arbre de sortie (12) qui est connecté de manière solidaire en rotation au troisième élément de transmission (21), l'unité de transmission variable (3) pouvant être connectée de manière solidaire en rotation à l'arbre de prise de force (23) par le biais d'un embrayage (22) et l'arbre de prise de force (23) étant connecté de manière solidaire en rotation et permanente au deuxième élément de transmission (20) par le biais d'un étage de transmission, une vitesse de rotation variant avec la vitesse de rotation de l'arbre de prise de force (23) étant obtenue pour le troisième élément de transmission (21) lorsque l'embrayage (22) est fermé, comprenant les étapes de procédé suivantes :
- augmentation d'un rapport de démultiplication de l'unité de transmission variable (3 ; étape 31) dans une première plage de conduite lorsque la connexion de l'arbre de sortie (9) de l'unité de transmission variable (3) au deuxième élément de transmission (20) est établie jusqu'à l'obtention d'un rapport de vitesse de rotation de l'arbre de sortie (12) de la branche de transmission mécanique à un arbre d'entrée (11) de la branche de transmission mécanique (10) qui correspond au rapport de démultiplication de la branche de transmission mécanique (10) dans la deuxième plage de conduite à ajuster,
- séparation d'une connexion de l'arbre de sortie (9) de l'unité de transmission variable (3) au deuxième élément de transmission (20) et connexion d'un arbre d'entrée (11) de la branche de transmission mécanique (10) à l'arbre de sortie (12) de la branche de transmission mécanique (étape 32) par le biais d'un premier étage de démultiplication (13) définissant la deuxième plage de conduite à ajuster avec le troisième élément de transmission (21),
- séparation de la connexion de l'arbre de sortie (12) de la branche de transmission mécanique à l'arbre d'entrée (11) de la branche de transmission mécanique par le biais du premier étage de démultiplication et connexion de l'arbre de sortie (12) de la branche de transmission mécanique (étape 34a) à l'arbre d'entrée (11) de la branche de transmission mécanique (10) par le biais d'un deuxième étage de démultiplication (14) qui définit une troisième plage de conduite pour le changement de la deuxième à la troisième plage de conduite.

13. Procédé selon la revendication 12, **caractérisé en ce que** pendant la séparation de la connexion de l'arbre de sortie (12) de la branche de transmission mécanique (10) à l'arbre d'entrée (11) de la branche de transmission mécanique (10) par le biais du premier étage de démultiplication (13) et la connexion de l'arbre de sortie (12) de la branche de transmission mécanique (10) à l'arbre d'entrée (11) de la branche de transmission mécanique (10) par le biais d'un deuxième étage de démultiplication (14), qui définit la troisième plage de conduite, une adaptation de vitesse de rotation du premier élément de transmission (19) par ajustement du rapport de démultiplication de l'unité de transmission variable (3) est effectuée (étape 34b).

14. Procédé selon la revendication 13, **caractérisé en ce que** pour l'ajustement du rapport de démultiplication, un volume de refoulement d'une pompe hydraulique (5) d'une transmission hydrostatique formant l'unité de transmission variable (3) est ajusté.
